# EUROPEAN PATENT APPLICATION

(11) **EP 1 818 220 A2**
(43) Date of publication of application: **15.08.2007**
(21) Application number: 07101530.9
(22) Date of filing: 31.01.2007
(51) Int. Cl.: B60R 13/10

(54) **A method and apparatus for manufacturing number plate components**

(30) Priority: 31.01.2006 GB 0601914
(71) Applicant: Reflex Mouldings Limited, 33 Fairgreen Road Markethill Armagh, BT60 1PW, Northern Ireland (GB)
(72) Inventor: Hurson, Peadar, Markethill, Armagh BT60 1PW (GB)
(74) Representative: McCarthy, Denis Alexis

(57) **Abstract**

A method for the manufacture of number plate components comprising the steps of providing an oversized number plate blank and an oversized reflective layer, assembling the component parts (71) together in substantial registry and removing the oversized edges off the assembled number plate components (71) to provide substantially exact size assembled number plate components (71). A moulding tool (31) having a central cavity (32) for forming a blank for a number plate, the moulding tool further defining a continuous groove (33) extending around the perimeter of the central cavity (32) and opening into the central cavity (32) for forming an oversized number plate blank having a normal thickness blank and a reduced thickness flange (73). A punch and die arrangement ('I) wherein the die (3) is adapted for receiving oversized number plate components (71) on the die (3) so that operation of the punch (2) removed the oversized edges of the oversized number plate components (71). An apparatus for manufacturing number plate components (71) comprising at least a moulding tool for moulding an oversized number plate blank (71), a laminating station for laminating an oversized reflective sheet onto the oversized blank and a punch and die arrangement (8) for punching the oversized edges off the oversized laminate blank and reflective sheet number plate component (71).

## Description

The present invention relates to a method and apparatus for manufacturing number plate components and in particular to a method and apparatus for improving the quality of the number plate components manufactured.

The art of manufacturing number plates is well known and involves the use of a blank manufactured to a predetermined size to conform to the British Standard BSAU 145d which has been in force since 1^{st} September 2001. When the blank has been manufactured from any one of a range of materials including ABS, PET, Acrylic or any metal alloy, a reflective layer must then be applied precisely across one of the main planar surfaces of the blank to accurately cover the main planar surface of the blank. This reflective layer must also conform to the minimum retro-reflectivity requirements of BSAU 145d. The fitting of the reflective layer to the blank has provided a source of problems with the exact dimensional tolerances between blank and reflective layer being notoriously difficult to achieve. This results in the reflective layer and the blank having slightly different sizes so that the reflective layer does not entirely cover the planar surface of the blank or the reflective layer extends beyond the boundaries of the blank. Consequently, a problem of separation of the two layers of the laminated product has arisen as a result of the size difference between the blank and the reflective layer after the reflective layer has been fitted to the blank.

It is an object of the present invention to obviate or mitigate the problems outlined above in order to provide a high quality number plate component for use in subsequent manufacturing processes to produce a high quality finished number plate.

Accordingly, the present invention provides a method for the manufacture of number plate components comprising the steps of providing an oversized number plate blank and an oversized reflective layer, assembling the component parts together in substantial registry and removing the oversized edges off the assembled number plate components to provide substantially exact size assembled number plate components.

Ideally, the method further comprises the steps of assembling the number plate components by providing oversized blanks and applying an adhesive surface of a correspondingly oversized reflective sheet material to one main planar surface of the oversized blanks to form oversized number plate components.

Preferably, the method further comprises the step of applying the oversized reflective sheet material from a roll of material disposed on a roller.

Ideally, the method comprises the step of operating the roller proximal to a conveyor belt carrying oversized blanks so that the oversized reflective sheet material is applied onto the blanks as they pass proximal to the roller.

Ideally, the method comprises arranging the conveyor belt to pass below the roller.

Preferably, the method comprises delivering the oversized number plate components into a die.

Ideally, the method comprises operating an associated punch to shear off the oversized edges of the number plate components. This produces a substantially exact size number plate component conforming to the dimensional requirements of BSAU 145d.

Preferably, the method comprises releasing the punched number plate components out of the bottom of the die.

Ideally, the method comprises allowing the punched number plate components to fall onto a removal conveyor belt below the die.

Ideally, the method comprises moulding the oversized blanks.

Preferably, the method comprises providing oversized blanks each with an integral flange around the edge of a standard size blank, the flange having a reduced thickness in comparison with the thickness of the blank.

Ideally, the method comprises providing a bevelled region between the reduced thickness flange and the normal thickness blank.

The present invention also provides a moulding tool having a central cavity for forming a blank for a number plate, the moulding tool further defining a continuous groove extending around the perimeter of the central cavity and opening into the central cavity for forming an oversized number plate blank having a normal thickness blank and a reduced thickness flange.

Preferably, the central cavity has a bevelled region intermediate the reduced thickness groove and the central cavity.

Ideally, the bevel angle is in the range of 40 to 50 degrees.

Preferably, the bevel angle is 45 degrees.

Ideally, the outside dimensions of the cavity and groove are approximately 115mm wide and approximately 524mm long. The standard dimensions of a number plate are approximately 111 mm wide and approximately 520mm long.

Preferably, the outside dimensions of the central cavity and groove are 524mm ± 0.7mm long and 115mm ± 0.3mm wide.

The present invention also provides a punch and die arrangement, the die being adapted for receiving oversized number plate components on the die so that operation of the punch removes the oversized edges of the oversized number plate components.

Ideally, the die has guide means on an upper surface thereof for receiving the oversized number plate components and for accurately positioning oversized number plate components on the die surface.

Preferably, the punch and die are manufactured from D2 steel.

Preferably, the tolerance between the vertical punch and vertical die faces is 0,03mm-0.05mm.

Ideally, the punch enters into the die face a depth in the range of 2 mm to 5 mm.

Preferably, the punch enters the die at a press RPM setting in the range of 1150 rpm to 1250 rpm.

Ideally, the punch enters the die at approximately 90 degrees.

Preferably, the punch has a punching head for contacting the upwardly facing uneven planar surface of the laminated number plate component.

Ideally, the perimeter of the surface of the punching head has a tapered punch cutting ridge protruding beyond the surface of the punching head.

Preferably, the portion of the punch cutting ridge distal to the surface of the punch has a flattened surface for engaging the number plate component.

Ideally, a lip of the opening of the die has a tapered die cutting ridge protruding beyond the surface of the die.

Preferably, the die cutting ridge tapers to a point for supporting the number plate component.

Ideally, the angle α of the taper on the punch cutting ridge is 45°.

Preferably, the width of the flattened surface of the punch cutting ridge is in the range of 0.2 mm to 0.5 mm.

Ideally, the angle β of the taper on the die cutting ridge is 20°.

Preferably, the guide means comprises a pair of guides on the surface of the die for receiving the laminated oversized number plate component and guiding it onto the die cutting ridge.

Ideally, the vertical face of the die has a 4 mm - 5 mm parallel land and a recess of approximately 1 mm below the die face.

The present invention also provides an apparatus for manufacturing number plate components comprising at least a moulding tool for moulding an oversized number plate blank, a laminating station for laminating an oversized reflective sheet onto the oversized blank and a punch and die for punching the oversized edges off the oversized laminate blank and reflective sheet number plate component.

The invention will now be described with reference to the accompanying drawings which show by way of example only one embodiment of apparatus for performing the method of manufacturing the number plate components in accordance with the invention. In the drawings:-
Figure 1 is an elevational view of a punch and die arrangement in a first position;
Figure 2 is a second elevational view of the punch and die arrangement of Figure 1 in a second position;
Figure 3 a detail view of a portion of the punch and die arrangement of Figures 1 and 2;
Figure 4 is a top plan view of the moulding tool for the oversized blanks;
Figure 5 is a cross-sectional view of Figure 4 taken through A-A;
Figure 6 is a cross-sectional view of Figure 4 taken through B-B:
Figure 7 is a top plan view of an oversized number plate component;
Figure 8 is a side view of the oversized number plate component of Figure 7;
Figure 9 is a detail view of the encircled portion of Figure 8 referenced A;
Figure 10 is a top plan view of a punched number plate component;
Figure 11 is a side view of the punched number plate component of Figure 10; and
Figure 12 is a detail view of the encircled portion of Figure 11 referenced A;

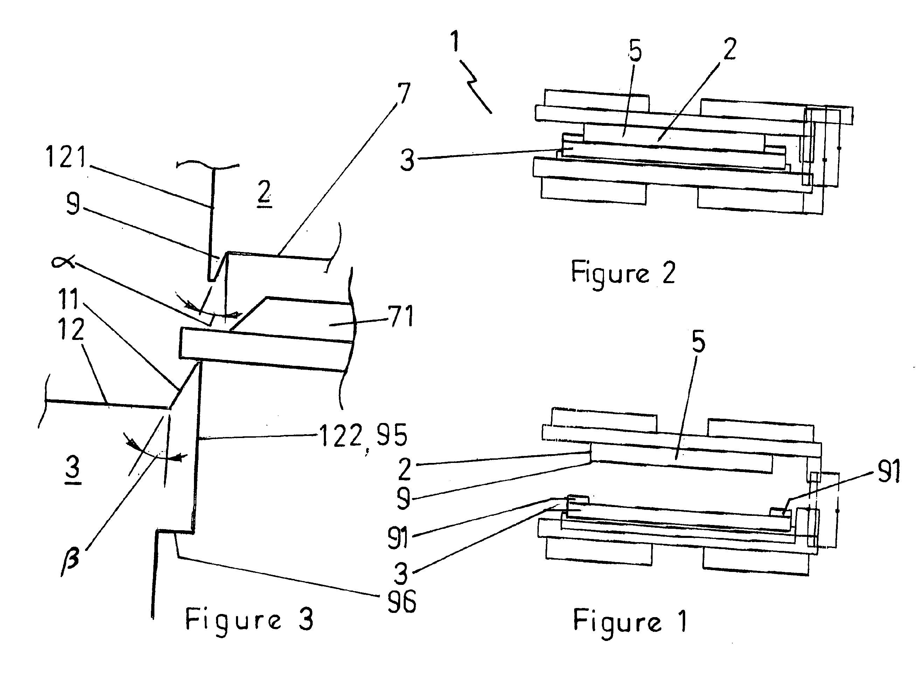

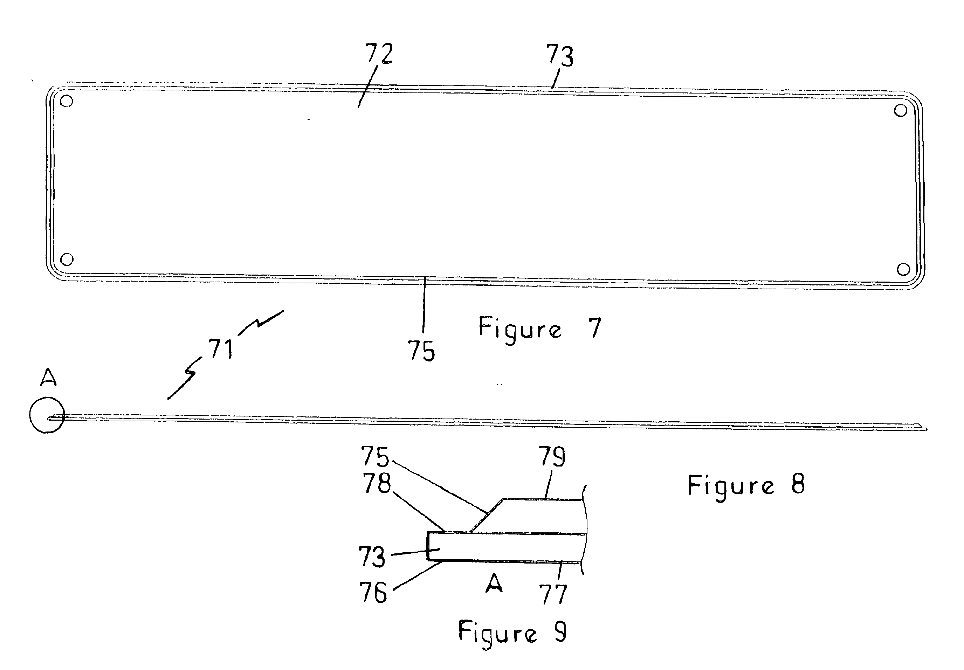

Referring to the drawings and initially to Figures 1, 2 and 3, there is shown a punch and die arrangement indicated generally by the reference numeral 1. The punch and die arrangement 1 has a punch 2 and a die 3 and the die 3 is adapted for receiving oversized laminated number plate components 71, see figures 7 to 9, so that operation of the punch 2 removes the oversized edges of the oversized laminated number plate components 71, The punch 2 has a punching head 5 for contacting the upwardly facing uneven planar surface of the laminated number plate component 71. The perimeter of the surface 7 of the punching head 5 which contacts the upwardly facing uneven planar surface of the laminated oversized number plate components 71 has a tapered punch cutting ridge 9 protruding beyond the surface 7 of the punching head 5, downwardly in use. The portion of the ridge 9 distal to the surface 7 has a flattened surface 13 which engages the number plate component 71. A lip of the opening of the die 3 also has a raised tapered die cutting ridge 11 protruding beyond the surface 12 of the die 3, upwardly in use. The die cutting ridge 11 tapers to a point which the number plate component 71 rests on in use. The angle α of the taper on the punch cutting ridge 9 is 45° and the width of the flattened surface 13 is in the range of 0.2 mm to 0.5 mm. The angle β of the taper on the die cutting ridge 11 is 20°.

The die 3 has a pair of guides 91 on the surface 12 thereof for receiving the laminated oversized number plate component 71. The guides 91 are formed for receiving the oversized number plate component 71 and for accurately positioning the oversized number plate component 71 on the die surface 12 around the opening of the die 3 and resting on the raised tapered die cutting ridge 11. The punch 2 and die 3 are preferably manufactured from grade D2 steel and the tolerance between the vertical faces 121, 122 of the punch 2 and the die 3 respectively is in the range of 0.03 mm - 0.05 mm.

In use, the punch 2 enters into the die 3 a depth in the range of 2 mm to 5 mm and the punch 2 enters the die 3 at a press RPM setting in the range of 1150 rpm to 1250 rpm. The punch 2 enters the die at approximately 90 degrees. The vertical face 122 of the die 2 has a 4 mm - 5 mm parallel land 95 and a recess 96 of approximately 1 mm below the die face.

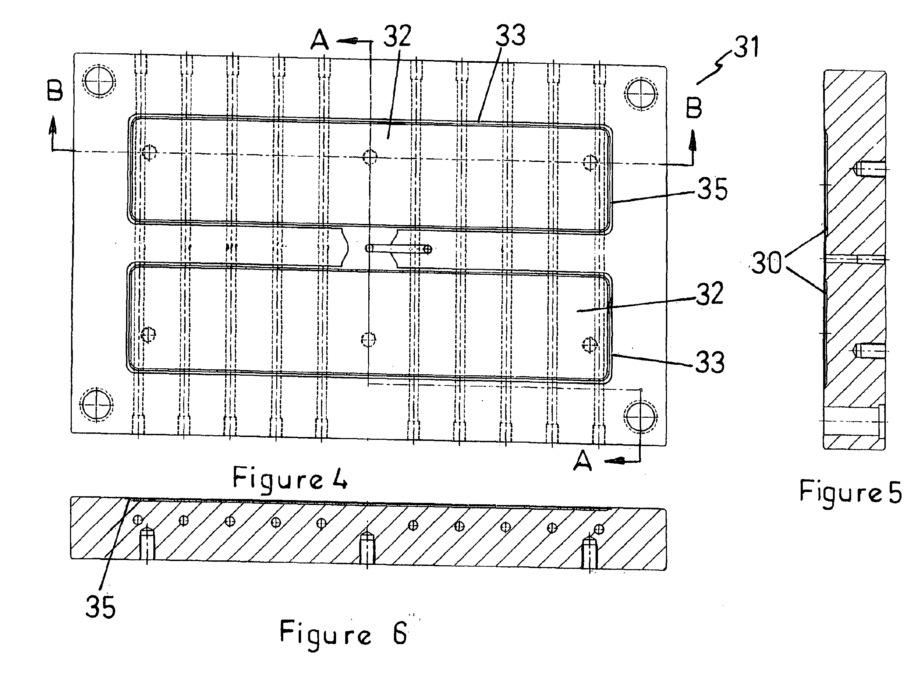

Referring to Figures 4 to 6 of the drawings, there is shown a moulding tool indicated generally by the reference numeral 31 having a double mould 30 for simultaneously moulding two oversized number plate blanks. Each mould 30 has a central cavity 32 for forming a uniform thickness main body 72 of a blank for a number plate, see Figures 7 to 12. The moulding tool 31 further defines a continuous groove 33 extending around the perimeter of the central cavity 32 and opens into the central cavity 32 for forming a flange 73 around the perimeter of the oversized number plate blank. The groove 33 has a reduced thickness region compared to the thickness of the central cavity 32 and there is a bevelled region 35 intermediate the reduced thickness groove 33 and the central cavity 32 so that one surface of the flange 73 of a formed blank is in alignment with the surface of the uniform thickness main body 72 and the opposite surface of the flange 73 is offset from the main surface of the uniform thickness main body 72 with the bevelled region 35 forming a ramp between the offset surface of the flange and the surface of the uniform thickness main body 72.

The outside dimensions of the central cavity 32 and the groove 33 are approximately 115 mm wide and approximately 524 mm long. The dimensions of a standard number plate are approximately 111 mm wide and approximately 520 mm long. The outside dimensions of the central cavity 32 and the groove 33 are more preferably within the tolerance ranges of 524 mm ± 0.7 mm long and 115 mm ± 0.3 mm wide.

Referring to the drawings and now to Figures 7 to 9, there is shown an oversized number plate component indicated generally by the reference numeral 71 formed in the moulding tool 31. Each number plate component 71 has a uniform thickness main body blank 72 and a continuous flange 73 extending around the perimeter of the main body blank 72. The continuous flange 73 has a reduced thickness compared to the thickness of the main body blank 72 and the main body blank 72 has a bevelled region 75 intermediate the reduced thickness flange 73 and the main body blank 72. One surface 76 of the flange 73 of the number plate component 71 is in alignment with the surface 77 of the uniform thickness main body blank 72 and the opposite surface 78 of the flange 73 is offset from the corresponding surface 79 of the uniform thickness main body blank 72 with the bevelled region 75 forming a ramp between the surface 78 of the flange 73 and the surface 79 of the uniform thickness main body blank 72.

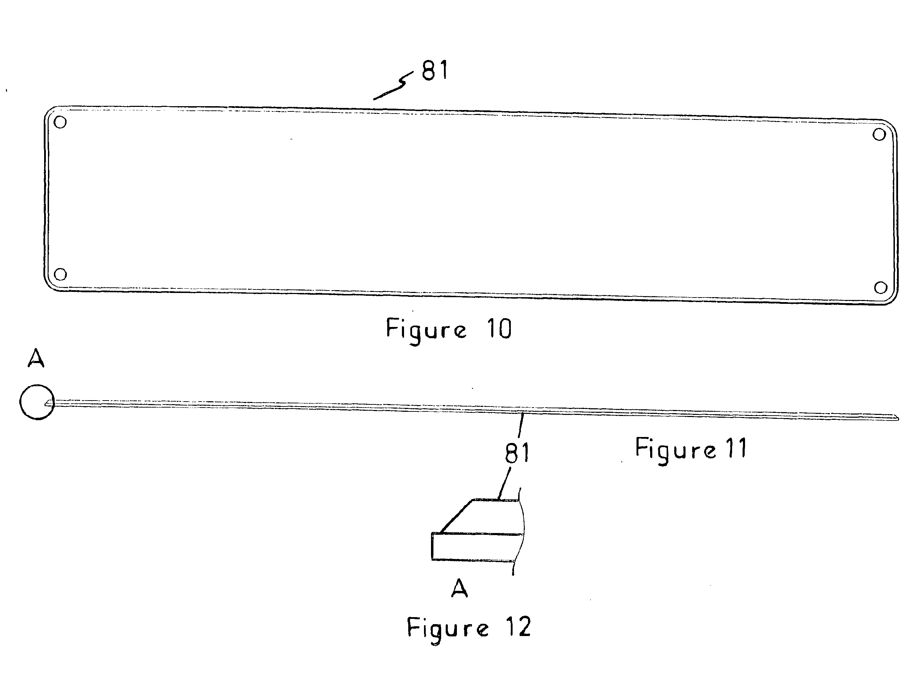

Figures 10 to 12 show a punched number plate component 81 where the oversized portion of the flange 73 has been sheared off by the operation of the punch 2 and die 3.

In use, the oversized blanks are injection moulded in the double mould 30 and when they are formed they are split and the connecting sprues are removed. The oversized blanks are set onto a conveyor belt which carries the blanks, even planar surface upwardly facing, one at a time below a dispenser carrying a roll of oversized reflective sheet material. The conveyor belt and dispensing roller are arranged so that the dispenser dispenses the oversized reflective sheet material in alignment with the conveyor belt and blanks at a laminating station. An adhesive surface of the oversized reflective sheet material is exposed to the even planar surface of the blank. The oversized reflective sheet material therefore adheres to the even planar surface of the blank as it passes below the roller. Clearly, there is a major technical advantage in applying oversized reflective sheet material to the oversized even planar face of each blank in that the accuracy of the application of the reflective material is not critical provided the sheet covers the surface of each blank because excess material will be sheared off at the next stage of the process. The laminate blank and reflective material number plate component 71 is then passed onto the surface of a die 3 with the assistance of the guides 91. The oversized number plate component 71 is arranged as shown partially in Figure 3 with the flange 73 resting on the die cutting ridge 11 protruding beyond the surface 12 of the die 3. An operator powers the punch 2 and the flattened surface 13 of the tapered punch cutting ridge 9 contacts the flange 73 of the blank 72 and shears off the oversized portion of the flange 73 leaving a number plate component 71 conforming to the dimensional requirements of BSAU 145d. The action of the punch head 5 presses the exact size number plate component 71 into the cavity of the die 3 to a position where the punched number plate component 81 supports the subsequent oversized number plate component 71 as it is located onto the die 3. Advantageously, the die has an open bottom where the already punched number plate component 81 falls through onto a removal conveyor belt when the overlying oversized number plate component 71 is punched.

Variations and modifications can be made without departing from the scope of the invention as described above and claimed hereinafter.

## Claims

1. A method for the manufacture of number plate components comprising the steps of providing an oversized number plate blank (71) and an oversized reflective layer, assembling the component parts together in substantial registry and removing the oversized edges off the assembled number plate components to provide substantially exact size assembled number plate components.

2. A method as claimed in Claim 1 **characterised in that** the method further comprises the steps of assembling the number plate components by providing oversized blanks (71) and applying an adhesive surface of a correspondingly oversized reflective sheet material to one main planar surface of the oversized blanks to form oversized number plate components.

3. A method as claimed in Claim 2 **characterised in that** the method further comprises the step of applying the oversized reflective sheet material from a roll of material disposed on a roller.

4. A method as claimed in Claim 3 **characterised in that** the method comprising the step of operating the roller proximal to a conveyor belt carrying oversized blanks so that the oversized reflective sheet material is applied onto the blanks as they pass proximal to the roller.

5. A method as claimed in Claim 4 **characterised in that** the method comprises arranging the conveyor belt to pass below the roller.

6. A method as claimed in any one of the preceding claims **characterised in that** the method comprises delivering the oversized number plate components (71) into a die (3).

7. A method as claimed in any one of the preceding claims **characterised in that** the method comprises operating an associated punch (2) to shear off the oversized edges of the number plate components (71).

8. A method as claimed in Claim 7 **characterised in that** the method comprises releasing the punched number plate components (81) out of the bottom of the die (3).

9. A method as claimed in Claim 8 **characterised in that** the method comprises allowing the punched number plate components (81) to fall onto a removal conveyor belt below the die (3).

10. A method as claimed in any one of the preceding claims **characterised in that** the method comprises moulding the oversized blanks (71),

11. A method as claimed in any one, of the preceding claims **characterised in that** the method comprises providing oversized blanks (71) each with an integral flange (73) around the edge of a standard size blank (71), the flange (73) having a reduced thickness in comparison with the thickness of the blank (71).

12. A method as claimed in Claim 11 **characterised in that** the method comprises providing a bevelled region (75) between the reduced thickness flange (73) and the normal thickness blank (71).

13. A moulding tool (31) having a central cavity for forming a blank for a number plate, the moulding tool further defining a continuous groove (33) extending around the perimeter of the central cavity (32) and opening into the central cavity (32) for forming an oversized number plate blank (71) having a normal thickness blank (71) and a reduced thickness flange (73).

14. A moulding tool (31) as claimed in Claim 13 3 **characterised in that** the central cavity (32) has a bevelled region (75) intermediate the reduced thickness groove (33) and the central cavity (32).

15. A moulding tool (31) as claimed in Claim 14 **characterised in that** the bevel angle is in the range of 40 to 50 degrees.

16. A moulding tool (31) as claimed in Claim 15 **characterised in that** the bevel angle is 45 degrees.

17. A punch and die arrangement (1) wherein the die (3) is adapted for receiving oversized number plate components (71) on the die (3) so that operation of the punch (2) removed the oversized edges of the oversized number plate components (71).

18. A punch and die arrangement (1) as claimed in Claim 17 **characterised in that** the die (3) has guide means (91) on an upper surface thereof for receiving the oversized number plate components (71) and for accurately positioning oversized number plate components on the die surface.

19. A punch and die arrangement (1) as claimed in Claim 17 or 18 **characterised in that** the punch (2) and die (3) are manufactured from D2 steel.

20. A punch and die arrangement (1) as claimed in Claim 19 **characterised in that** the tolerance between the vertical punch and vertical die faces (121, 122) is 0.03mm-0.05mm.

21. A punch and die arrangement (1) as claimed in any one of Claims 17 to 20 **characterised in that** the punch (2) enters into the die face (122) a depth in the range of 2 mm to 5 mm.

22. A punch and die arrangement (1) as claimed in Claim 21 **characterised in that** the punch (2) enters the die (3) at a press RPM setting in the range of 1150 rpm to 1250 rpm.

23. A punch and die arrangement (1) as claimed in Claim 22 **characterised in that** the punch (2) enters the die (3) at approximately 90 degrees.

24. A punch and die arrangement (1) as claimed in any one of the Claims 17 to 23 **characterised in that** the punch (2) has a punching head for contacting the upwardly facing uneven planar surface of the laminated number plate component.

25. A punch and die arrangement (1) as claimed in Claim 24 **characterised in that** the perimeter of the surface of the punching head (5) has a tapered punch cutting ridge (9) protruding beyond the surface of the punching head (5).

26. A punch and die (1) arrangement as claimed in Claim 25 **characterised in that** the portion of the punch cutting ridge (9) distal to the surface of the punch (2) has a flattened surface (13) for engaging the number plate component (71).

27. A punch and die arrangement (1) as claimed in Claim 26 **characterised in that** a lip of the opening of the die (3) has a tapered die cutting ridge (11) protruding beyond the surface of the die (3).

28. A punch and die arrangement (1) as claimed in Claim 27 **characterised in that** the die cutting ridge (11) tapers to a point for supporting the number plate component (71).

29. A punch and die arrangement (1) as claimed in any one of Claims 25 to 28 **characterised in that** the angle of the taper on the punch cutting ridge (9) is 45°.

30. A punch and die arrangement (1) as claimed in any one of Claims 26 to 29 **characterised in that** the width of the flattened surface (13) of the punch cutting ridge (9) is in the range of 0.2 mm to 0.5 mm.

31. A punch and die arrangement (1) as claimed in any one of Claims 27 to 30 **characterised in that** the angle β of the taper on the die cutting ridge (11) is 20°,

32. A punch and die arrangement (1) as claimed in any one of Claims 18 to 31 **characterised in that** the guide means comprises a pair of guides (91) on the surface of the die (3) for receiving the laminated oversized number plate component and guiding it onto the die cutting ridge (11).

33. A punch and die arrangement (1) as claimed in any one of Claims 20 to 32 **characterised in that** the vertical die face (122) has a 4 mm - 5 mm parallel land and a recess of approximately 1 mm below the die face (122).

34. An apparatus for manufacturing number plate components (81) comprising at least a moulding tool (31) for moulding an oversized number plate blank (71), a laminating station for laminating an oversized reflective sheet onto the oversized blank (71) and a punch and die arrangement for punching the oversized edges off the oversized laminate blank and reflective sheet number plate component.
